# EUROPEAN PATENT SPECIFICATION

(11) **EP 4 041 527 B1**
(45) Date of publication and mention of the grant of the patent: **26.02.2025**
(21) Application number: 20789283.7
(22) Date of filing: 05.10.2020
(51) Int. Cl.: B29C 48/30, B29C 48/18, B29C 48/25, B29C 48/92

(54) **AN APPARATUS AND A METHOD FOR PRODUCING A MULTI-LAYER EXTRUDATE**
VORRICHTUNG UND VERFAHREN ZUR HERSTELLUNG EINES MEHRSCHICHTIGEN EXTRUDATS
APPAREIL ET MÉTHODE DE PRODUCTION D'UN EXTRUDAT MULTI-COUCHE

(30) Priority: 11.10.2019 IT 201900018530
(43) Date of publication of application: 17.08.2022
(73) Proprietor: SACMI COOPERATIVA MECCANICI IMOLA SOCIETA' COOPERATIVA, 40026 Imola (IT)
(72) Inventor: PUCCI, Fabrizio, 40023 Castel Guelfo Di Bologna (Bologna) (IT); PARRINELLO, Fiorenzo, 40059 Medicina (Bologna) (IT)
(74) Representative: Colò, Chiara
(86) International application number: PCT/IB2020/059320
(87) International publication number: WO 2021/070031

(56) References cited:
- EP-A1- 1 676 687
- EP-A1- 3 299 142
- EP-A2- 0 232 902
- JP-A- S5 436 387
- US-A- 5 104 305

## Description

The invention relates to an apparatus and a method for producing a multi-layer extrudate in order to obtain multi-layer doses, that is to say, to obtain doses having a plurality of layers which are made with at least two different polymeric materials. These multi-layer doses are intended to be used in a compression moulding process, so as to obtain objects such as containers, caps, preforms for containers, capsules for coffee or other products in powder or granule form.

The doses which the apparatus and the method according to the invention allow to be obtained may, for example, comprise a central layer made with a material having barrier proprieties to gases, and/or to oxygen, and/or to light, interposed between at least two outer layers intended to give the object that will be formed from the dose the desired mechanical and aesthetic properties. Alternatively, the central layer may be made with a recycled polymeric material, interposed between at least two layers of virgin polymeric material.

The production of multi-layer objects by means of compression moulding of multi-layer doses is known. Prior art multi-layer doses are usually obtained by continuously extruding at least one central layer and two outer layers of polymeric material, so as to supply a multi-layer extrudate intended to be cut at preset intervals for separating the multi-layer doses. The cutting operation which allows the multi-layer doses to be obtained occurs by means of a blade which cuts both the central layer and the peripheral layers. In this way, it is possible to produce multi-layer doses having the shape of a parallelepiped, in which the central layer lies in a plane parallel to a larger face of the parallelepiped and appears on the surface on at least two smaller faces of the parallelepiped, along which the multi-layer extrudate has been cut to form the multi-layer dose.

Since the central layer appears on the surface on the faces of the parallelepiped defined by the multi-layer dose, that layer may also appear on an outer surface of the object formed by compression moulding the multi-layer dose. That is not desirable, above all with some types of objects, since if the central layer is visible on the surface of the object it worsens the appearance of the object and may compromise some of its properties.

It is therefore desirable for the central layer to be enveloped between the outer layers of the dose, so that it does not appear on the outer surface of the object which will be obtained from the multi-layer dose.

This is particularly true when the central layer is a significant part of the dose, as is the case if the central layer is formed from recycled material. In this case, the central layer may occupy 50-70% of the volume of the dose. In order to ensure that the central layer is enclosed between the outer layers of the dose, it is possible to extrude the central layer intermittently, while the outer layers are extruded continuously. In this way, what is obtained is a multi-layer extrudate in which the central layer, interposed between the outer layers, is only present in some portions, whilst in other portions only the outer layers are present. If the multi-layer extrudate obtained in this way is cut in the portions in which only the outer layers are present, it is possible to obtain multi-layer doses in which the outer layers cover the central layer, even on the sections in which the dose has been separated from the multi-layer extrudate.

EP 0232902 shows an example of an apparatus in which the material of the central layer is extruded intermittently through a passage hole in which a rod of a valve engages. The rod slides along the passage hole so as to allow, or alternatively prevent, the outflow of the material of the central layer from an opening positioned at one end of the passage hole.

A drawback of prior art apparatuses in which the material of the central layer is intermittently extruded is that they are rather complex. In particular, such apparatuses require cut-off elements, such as the rod of the valve in EP 0232902, which must be manufactured with very small tolerances in order to operate correctly, and which must be controlled extremely precisely during extrusion.

Further examples of prior art apparatuses are disclosed in JP S54 36387 and in EP 3299142.

An object of the invention is to improve the prior art apparatuses and methods for obtaining multi-layer doses, particularly multi-layer doses comprising a plurality of polymeric materials, the multi-layer doses being intended to be subsequently shaped in a compression moulding process.

A further object is to provide an apparatus and a method which allow the obtainment of a multi-layer dose in which a material intended to form a central layer of the multi-layer dose appears on the outer faces of the dose in a limited manner, or does not appear at all on the outer faces of the dose.

Another object is to provide an apparatus capable of producing a multi-layer dose having a central layer which is as far as possible contained between two or more outer layers, which can be constructed in a simple way.

Another object is to provide an apparatus and a method capable of producing a multi-layer dose having a central layer which is as far as possible contained between two or more outer layers, which can operate in a simple way.

In a first aspect of the invention, there is provided an apparatus for producing a multi-layer extrudate comprising an intermediate material interposed between at least two layers of outer material, the apparatus comprising an arrangement of ducts which includes a first duct and a second duct through which respective lateral flows of outer material can flow, the arrangement of ducts also including a further duct through which a central flow comprising at least the intermediate material can flow, the apparatus further comprising at least one obstructing element for interacting at least with the central flow while the central flow is advancing in an advancement direction, wherein said at least one obstructing element is movable with a movement having a component directed transversally to the advancement direction, so as to obstruct the central flow in the advancement direction at preset intervals.

Owing to the obstructing element, it is possible to periodically interrupt or at least limit the central flow in the advancement direction, so as to generate a multi-layer extrudate in which the thickness of the intermediate material is not constant for the entire length of the multi-layer extrudate. More specifically, the obstructing element allows the production of a multi-layer extrudate having zones in which the intermediate material is absent or has a very reduced thickness. If, during a subsequent step, the multi-layer extrudate is cut in the above-mentioned zones, what are obtained are multi-layer doses in which the intermediate material does not appear on the faces of the dose, or appears on the faces of the dose in an insignificant quantity. By compression moulding the multi-layer doses obtained in this way, good quality objects can be produced.

Moreover, by moving the obstructing element with a movement having a component directed transversally to the advancement direction of the central flow, it is possible to obtain an apparatus which is structurally and functionally simpler than that described in EP 0232902. Actually, there is elimination of the difficulties linked to the small tolerances and to the movement precision required by the rod of EP 0232902 in order to interrupt the flow of intermediate material by sliding parallel to the advancement direction in the related passage hole.

In an embodiment, said at least one obstructing element is configured to interrupt the central flow in the advancement direction at preset intervals.

In this way, the multi-layer extrudate has a plurality of portions in which the intermediate material is present, alternating with a plurality of further portions in which the intermediate material is absent.

In this way, it is possible to obtain multi-layer doses in which the intermediate material does not appear on the faces of the dose at which the dose has been separated from the multi-layer extrudate.

In an embodiment, said movement of the at least one obstructing element is a sliding movement along a direction which is transversal, for example perpendicular, to the advancement direction.

That allows the obtainment of an apparatus which is simple in terms of construction and operation.

In an embodiment, two obstructing elements are provided, each of which is movable with a movement having a component directed transversally to the advancement direction, the two obstructing elements being configured to interact on opposite sides of the central flow relative to an axis parallel to the advancement direction, so as to obstruct the central flow in the advancement direction at preset intervals.

That allows precise and effective control of the central flow and consequently the intermediate material.

In a second aspect of the invention, there is provided a method for producing a multi-layer extrudate comprising an intermediate material interposed between at least two layers of outer material, the method comprising the steps of:
- supplying at least two lateral flows of outer material;
- supplying a central flow comprising at least the intermediate material,
- providing at least one obstructing element which interacts at least with the central flow while the central flow is advancing in an advancement direction, wherein said at least one obstructing element moves with a movement having a component directed transversally to the advancement direction, so as to obstruct the central flow in the advancement direction at preset intervals.

The method provided by the second aspect of the invention allows the obtainment of the advantages previously described with reference to the apparatus according to the first aspect of the invention.

The invention can be better understood and implemented with reference to the accompanying drawings, which illustrate several example, non-limiting version embodiments of it, in which:
Figure 1 is a schematic cross-section showing a coextrusion apparatus from which a multi-layer extrudate can come out, in a first operating position;
Figure 2 is a schematic cross-section of the coextrusion apparatus of Figure 1, in a second operating position;
Figure 3 is a schematic side view, partly in cross-section, showing a multi-layer extrudate obtainable by means of the coextrusion apparatus of Figures 1 and 2;
Figure 4 is an enlarged cross-section of a multi-layer dose which can be obtained by cutting the multi-layer extrudate of Figure 3;
Figure 5 is a view, partly in cross-section, of the dose of Figure 4, from direction B of Figure 4;
Figure 6 is a schematic cross-section showing a coextrusion apparatus according to an alternative embodiment, in the first operating position;
Figure 7 is a schematic cross-section of the coextrusion apparatus of Figure 6, in the second operating position;
Figure 8 is a schematic cross-section showing a coextrusion apparatus according to an alternative embodiment, in the first operating position;
Figure 9 is a schematic cross-section of the coextrusion apparatus of Figure 8, in the second operating position;
Figure 10 is a schematic cross-section showing a coextrusion apparatus according to an alternative embodiment, in the first operating position;
Figure 11 is a schematic cross-section of the coextrusion apparatus of Figure 10, in a further operating position;
Figure 12 is a schematic cross-section of the coextrusion apparatus of Figure 10, in the second operating position;
Figure 13 is a schematic cross-section showing a coextrusion apparatus according to an alternative embodiment, in the first operating position;
Figure 14 is a schematic cross-section of the coextrusion apparatus of Figure 13, in the second operating position.

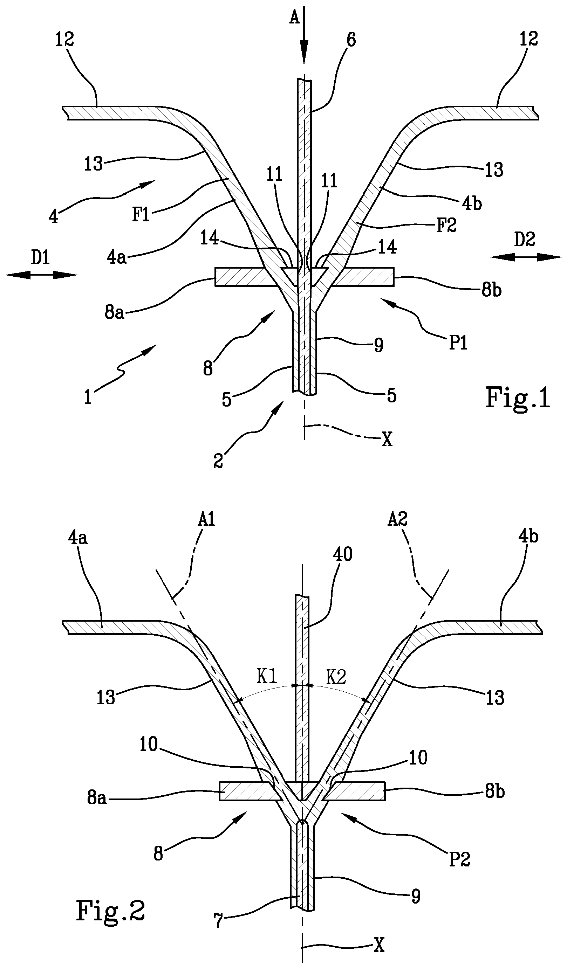

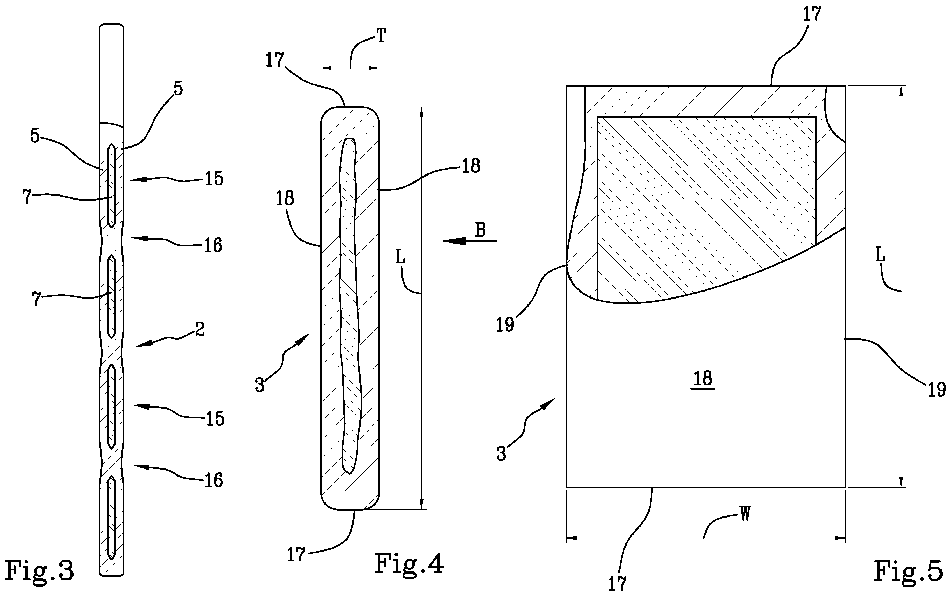

Figures 1 and 2 show the inside of a coextrusion apparatus 1, intended to produce a multi-layer extrudate 2, visible in Figure 3, from which it is possible to separate multi-layer doses 3, of the type shown in Figures 4 and 5.

The multi-layer doses 3 are intended to be processed in order to obtain objects by means of compression moulding. The objects obtainable from the multi-layer doses 3 may be containers, in particular but not exclusively capsules intended to contain powdered coffee or other ingredients from which it is possible to extract a component by means of water or steam. Alternatively, the multi-layer doses 3 can be used to produce caps, or gaskets, or preforms from which it is possible to obtain containers by means of blow moulding or stretch-blow moulding. More generally, the objects obtainable from the doses 3 may be any objects, for example having a concave or flat structure.

The coextrusion apparatus 1 may be included in a compression moulding apparatus, comprising for example one or more moulds, which in particular have a male mould part and a female mould part, each mould being intended to produce an object by compression moulding a corresponding dose 3. The moulds may be supported by a carousel, rotatable about an axis, for example a vertical axis. A conveying device which is not shown may be Interposed between the coextrusion apparatus 1 and the moulds, the conveying device being suitable for collecting, one after another, the multi-layer doses and for conveying them towards the moulds, in such a way that each dose is released inside a mould. For that purpose, the conveying device may comprise one or more conveying elements, which are movable along a path between a collecting position, in which each conveying element receives a dose 3 which has been separated from the multi-layer extrudate 2, and a releasing position, in which each conveying element releases the dose 3 in a mould. The path along which the conveying elements are movable may be a closed path, for example circular. The compression moulding apparatus may further comprise a separating element for separating the doses 3 from the multi-layer extrudate 2, by cutting the multi-layer extrudate 2 at preset intervals. The separating element may be integrated in the conveying elements which convey the dose towards the moulds, or distinct from the conveying elements.

As shown in Figures 1 and 2, the coextrusion apparatus 1 comprises an arrangement of ducts 4 for supplying at least two layers 5 of outer material and an intermediate material 7. In the example shown, the arrangement of ducts 4 comprises a first duct 4a and a second duct 4b, through each of which the outer material intended to form the layers 5 can flow. More specifically, a first lateral flow F1 flows through the first duct 4a, the first lateral flow F1 comprising the outer material intended to form one of the two layers 5. A second lateral flow F2 flows through the second duct 4b, the second lateral flow F2 comprising the outer material intended to form the other layer 5. The first duct 4a and the second duct 4b may be connected to respective extruders, not shown, each of which is suitable for supplying the outer material of a layer 5.

The arrangement of ducts 4 also comprises a further duct 6 through which a central flow 40 comprising the intermediate material 7 can flow. In the multi-layer extrudate 2, the intermediate material 7 is interposed between the layers 5 of outer material.

In the example shown, only the intermediate material 7 passes through the further duct 6. In other words, the central flow 40 comprises only the intermediate material 7.

The further duct 6 is connected to a further extruder, not shown, which has the function of supplying the intermediate material 7 in the further duct 6. The ducts of the arrangement of ducts 4, that is to say, the first duct 4a, the second duct 4b and the further duct 6, may have a rectangular or square cross-section.

The intermediate material 7 may be a polymeric material, in particular having barrier properties to oxygen, and/or to gases, and/or to flavours, and/or to light, for example EVOH. In this case, the intermediate material 7 is suitable for giving the object which will be formed from the dose 3 the desired barrier properties.

In an alternative embodiment, the intermediate material 7 may be a recycled polymeric material, for example of the same type as the outer material which forms the layers 5.

The outer material which forms the layers 5 may be a material intended to give the object which will be formed from the dose 3 the desired aesthetic and mechanical properties, in particular the desired mechanical strength. For example, the outer material which forms the layers 5 may be polyethylene terephthalate (PET), or polyethylene (PE), or polypropylene (PP), or polylactic acid (PLA), or others.

The outer material which forms the layers 5 may be different from the intermediate material 7. Alternatively, the outer material which forms the layers 5 may be of the same type as the intermediate material 7. In the latter case, the intermediate material 7 is a recycled polymeric material, whilst the outer material which forms the layers 5 is a virgin polymeric material.

The layers 5 may be formed from the same material, or one layer 5 may be made with a different material to the other layer 5.

The layers 5 may have the same thickness, or one layer 5 may have a different thickness to the other layer 5.

Between the layers 5 and the intermediate material 7 it is possible to interpose one or more further layers, for example made with adhesive or compatibilizing polymeric materials suitable for improving the adhesion between the layers 5 and the intermediate material 7.

At least one portion of the further duct 6 may have a straight shape and extend along an axis X. The first duct 4a and the second duct 4b are positioned on two opposite sides of the axis X. In the example shown, the first duct 4a and the second duct 4b are positioned symmetrically relative to the axis X, but this condition is not necessary.

The central flow 40 comprising the intermediate material 7 flows in the further duct 6 while advancing along an advancement direction A which, in the example shown, is parallel to the axis X.

The further duct 6, the first duct 4a and the second duct 4b merge in an outfeed duct 9 in which the intermediate material 7 is joined to the outer material of the layers 5, so as to form the multi-layer extrudate 2. At least in an initial stretch, the outfeed duct 9 may extend along the axis X, even though this condition is not necessary.

The first duct 4a and the second duct 4b may have respective initial portions 12 which extend transversally, in particularly perpendicularly, to the axis X.

The first duct 4a and the second duct 4b may comprise respective terminal portions 13 which merge in the outfeed duct 9. The terminal portions 13 may extend obliquely relative to the axis X.

As shown in Figures 1 and 2, the coextrusion apparatus 1 comprises at least one obstructing element for interacting at least with the central flow 40 comprising the intermediate material 7, while the central flow 40 is advancing in the advancement direction A inside the further duct 6. In the example shown, the obstructing element is located downstream of a portion of the further duct 6 directed along the axis X and upstream of a portion of the outfeed duct 9 directed along the axis X.

In the example shown, two obstructing elements 8a, 8b are provided, which are positioned on opposite sides of the further duct 6. However, this condition is not necessary and, in an embodiment version not shown, even a single obstructing element could be sufficient.

As described in more detail below, the obstructing elements 8a, 8b are configured to interact with the central flow 40 comprising the intermediate material 7 while the central flow 40 is advancing in the advancement direction A.

In more detail, the obstructing elements 8a, 8b are provided in the portion of the further duct 6 which extends along the axis X.

The obstructing elements 8a, 8b are located in a position upstream of a joining zone 8 in which the first duct 4a, the second duct 4b and the further duct 6 merge in the outfeed duct 9.

The obstructing elements 8a, 8b are each movable with a movement having a component directed transversally to the advancement direction A. In the example shown, that movement is a translating movement along a direction arranged transversally, for example perpendicularly, to the advancement direction A.

In other words, each of the obstructing elements 8a, 8b is movable along a respective direction D1, D2.

The directions D1 and D2 are aligned with each other, but the movement of the obstructing elements 8a, 8b is such that the obstructing elements 8a, 8b move away from each other or alternatively move towards each other.

In other words, the movement of each obstructing element 8a, 8b is a straight or linear forward and backward motion.

The obstructing elements 8a, 8b are therefore shaped like slides.

In more detail, the obstructing elements 8a, 8b are movable between a first operating position P1, shown in Figure 1, and a second operating position P2, shown in Figure 2.

Each obstructing element 8a, 8b has a passage hole 10, suitable for allowing the passage of the outer material of a layer 5. Each passage hole 10 extends in the thickness of the corresponding obstructing element 8a, 8b, for example along a direction oblique relative to the axis X, so that the first duct 4a and the second duct 4b open into a respective passage hole 10.

The passage holes 10 may have transversal dimensions slightly smaller than the transversal dimensions of the ducts 4a, 4b upstream of the obstructing elements 8a, 8b, even though this condition is not necessary. Each obstructing element 8a, 8b also has a contact surface 11 suitable for abutting against the corresponding contact surface 11 of the other obstructing element 8b, 8a. The contact surface 11 may be a flat surface, in particular extending in a plane parallel to the axis X.

Each obstructing element 8a, 8b is delimited, on the opposite side to the outfeed duct 9, by a closing surface 14, suitable for temporarily closing, at least partly, the further duct 6. The closing surface 14 may extend transversally, in particular perpendicularly, to the axis X. The closing surfaces 14 of the two obstructing elements 8a, 8b may lie in the same plane.

In the first operating position P1, as shown in Figure 1, the obstructing elements 8a, 8b are distanced from each other. In more detail, the contact surfaces 11 are not in contact with each other. This means that the further duct 6 is open, and the central flow 40 comprising the intermediate material 7 can flow into the outfeed duct 9. In particular, the central flow 40 passes in the space defined between the contact surfaces 11 of the obstructing elements 8a, 8b, so as to flow downstream of the obstructing elements 8a, 8b.

The outer material intended to form the layers 5 flows through the first duct 4a and the second duct 4b and passes through the corresponding passage hole 10, until it reaches the outfeed duct 9. Here, the outer material intended to form the layers 5 is positioned at the sides of the intermediate material 7, to create a portion 15 of the multi-layer extrudate 2 in which the intermediate material 7 is interposed between the two layers 5.

At preset time intervals, the obstructing elements 8a, 8b are moved towards each other respectively along the direction D1 and D2, that is to say, transversally (more precisely, perpendicularly) to the advancement direction A of the central flow 40. In this way, the second operating position P2 is reached, shown in Figure 2, in which the obstructing elements 8a, 8b are in contact with each other. In particular, in the second operating position P2 the contact surfaces 11 of the obstructing elements 8a, 8b are positioned against each other. In this position, the closing surfaces 14, which in the example shown define a common closing plane, interrupt the central flow 40 comprising the intermediate material 7. In this way, the obstructing elements 4a, 4b prevent the intermediate material 7 from reaching the outfeed duct 9. That is to say, the obstructing elements 8a, 8b interact with the intermediate material 7, blocking the passage thereof towards the outfeed duct 9.

In contrast, the lateral flows F1, F2 continue to flow towards the outfeed duct 9, since the passage holes 10, although being shifted relative to the position they had in the first operating position P1 of the obstructing elements 8a, 8b, continue to render respective regions of the first duct 4a and of the second duct 4b, arranged upstream of the obstructing elements 8a, 8b, in communication with the outfeed duct 9. In this position, only the outer material intended to form the layers 5 flows into the outfeed duct 9, and in this way a further portion 16 of the multi-layer extrudate 2 is formed in which the intermediate material 7 is absent.

Subsequently, the obstructing elements 8a, 8b are again moved away from each other by moving them along the directions D1, D2 and the first operating position P1 is reached again, so that the intermediate material 7 can resume flowing into the outfeed duct 9.

In short, in the first operating position P1 the obstructing elements 8a, 8b allow the central flow 40 comprising the intermediate material 7 to flow into the outfeed duct 9. In the second operating position P2, the obstructing elements 8a, 8b in contrast act as shutter elements and block the central flow 40 comprising the intermediate material 7 towards the outfeed duct 9. The outer material of the layers 5 flows downstream of the obstructing elements 8a, 8b, thereby reaching the outfeed duct 9, both in the first operating position P1, and in the second operating position P2.

The passage holes 10 put the first duct 4a and the second duct 4b in communication with the outfeed duct 9 even in the intermediate operating positions interposed between the first operating position P1 and the second operating position P2, while the obstructing elements 8a, 8b move towards each other and/or away from each other.

As already described, the terminal portions 13 of first duct 4a and of the second duct 4b are positioned obliquely relative to the further duct 6. More specifically, as shown in Figure 2, the terminal portions 13 of the first duct 4a and of the second duct 4b, which open into the outfeed duct 9, extend along respective axes A1, A2 which form with the further duct 6, in particular with the axis X of the latter, corresponding angles K1, K2 of less than 90°, preferably less than 45°. In the example shown, the angles K1, K2 are equal to each other, even though this condition is not necessary. This ensures that, when the central flow 40 comprising the intermediate material 7 is interrupted (which happens in the second operating position P2), the outer material intended to form the layers 5 is introduced into the outfeed duct 9 in a position as far back as possible relative to a rear end of the intermediate material 7 whose flow has just been blocked.

This is intended to prevent the outer material intended to form the layers 5 from laterally crushing the intermediate material 7 previously inserted into the outfeed duct 9, which could cause an incorrect separation between consecutive ends of the intermediate material 7 in the multi-layer extrudate 2.

The coextrusion apparatus 1 shown in Figures 1 and 2 allows the obtainment of the multi-layer extrudate 2 shown in Figure 3, in which the portions 15, in which the intermediate material 7 is present and interposed between the layers 5, regularly alternate with the further portions 16, in which the intermediate material 7 is absent.

By cutting the multi-layer extrudate 2 in the further portions 16, in which the intermediate material 7 is absent, it is possible to obtain a multi-layer dose 3 of the type shown in Figure 4, in which the intermediate material 7 does not appear on the outer surfaces of the dose 3 at which the dose 3 has been cut to separate it from the multi-layer extrudate 2.

More specifically, the dose 3 has the shape of a parallelepiped having a length L, a width W and a thickness T. The width W and the thickness T are determined by the dimensions of an outlet mouth of the coextrusion apparatus 1, which in the example shown has a rectangular cross-section. In contrast, the length L depends on the interval between two successive cuts of the multi-layer extrudate 2, or more precisely on the length of the multi-layer extrudate 2 which comes out of the outlet mouth of the coextrusion apparatus 1 in the time which elapses between two successive cuts.

The dose 3 is delimited by two cutting faces 17 along which the dose 3 has been cut to separate it from the multi-layer extrudate 2. The cutting faces 17 are positioned at a distance from each other equal to the length L of the dose 3.

The dose 3 is also delimited by two larger faces 18, lying in planes which are parallel and at a distance from each other equal to the thickness T, and by two smaller faces 19, also lying in planes which are parallel and at a distance from each other equal to the width W.

Since the cutting operation by means of which the dose 3 is separated from the multi-layer extrudate 2 takes place in the further portion 16 of the multi-layer extrudate 2, in which the intermediate material 7 is absent, the intermediate material 7 does not appear on the cutting faces 17.

Moreover, by suitably dimensioning the first duct 4a, the second duct 4b, the further duct 6 and the outfeed duct 9, it is possible to ensure that the intermediate material 7 does not appear on the smaller faces 19 either.

In this way, a dose 3 is obtained in which the intermediate material 7 is completely surrounded by the outer material of the layers 5.

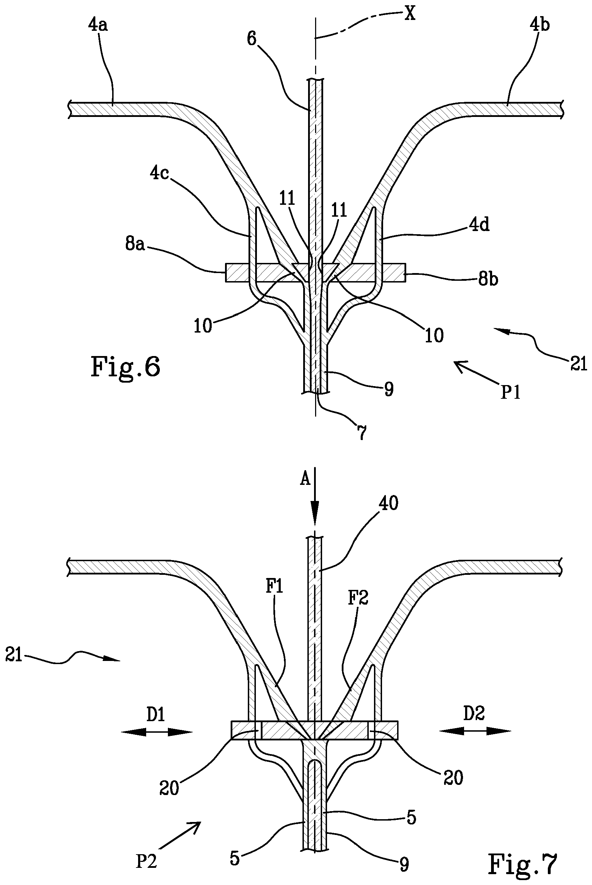

Figures 6 and 7 show a coextrusion apparatus 21 according to an alternative embodiment. The parts of the coextrusion apparatus 21 common to the coextrusion apparatus 1 shown in Figures 1 and 2 will be indicated with the same reference numbers used in Figures 1 and 2 and will not be described again in detail.

The coextrusion apparatus 21 differs from the coextrusion apparatus 1 mainly because it comprises a different arrangement of ducts 4. In particular, a secondary duct 4c branches off from the first duct 4a, upstream of the obstructing element 8a, the secondary duct 4c opening into the outfeed duct 9 downstream of the region in which the first duct 4a opens into the outfeed duct 9. Similarly, a further secondary duct 4d branches off from the second duct 4b, upstream of the obstructing element 8b, the further secondary duct 4d opening into the outfeed duct 9 downstream of the region in which the second duct 4b opens into the outfeed duct 9.

The obstructing elements 8a, 8b each have the passage hole 10, suitable for allowing the outer material which flows in the first duct 4a and respectively in the second duct 4b to reach the outfeed duct 9. Moreover, each obstructing element 8a, 8b has a further passage hole 20, suitable for selectively allowing the outer material present in the secondary duct 4c and respectively in the further secondary duct 4d to arrive in the outfeed duct 9. In more detail, the outer material intended to form the layers 5 flows in the first duct 4a and in the second duct 4b. At some point, a part of that outer material is diverted into the secondary duct 4c and respectively into the further secondary duct 4d, whilst the remaining part continues to flow in the first duct 4a and in the second duct 4b. The central flow 40, comprising the intermediate material 7, passes instead through the further duct 6.

The obstructing elements 8a, 8b are movable according to what was previously described with reference to Figures 1 and 2, with a linear forward and backward movement along respective directions D1 and D2 arranged transversally, in particular perpendicularly, to the advancement direction A of the central flow 40 comprising the intermediate material 7, that is to say, to the axis X. At least a portion of the further duct 6 extends along the axis X, said portion being arranged spanning the obstructing elements 8a, 8b. In more detail, the obstructing elements 8a, 8b are movable between a first operating position P1, shown in Figure 6, and a second operating position P2, shown in Figure 7. In the first operating position P1, the obstructing elements 8a, 8b are distanced from each other, so that between their contact surfaces 11 a space is defined through which the central flow 40 comprising the intermediate material 7 can pass. That is to say, the obstructing elements 8a, 8b leave the further duct 6 open, in the first operating position P1. In that position, the outer material intended to form the layers 5 can flow downstream of the obstructing elements 8a, 8b both through the passage holes 10 and through the further passage holes 20. Actually, in the first operating position P1, the passage holes 10 are positioned at the first duct 4a and at the second duct 4b, so that the outer material intended to form the layers 5 is able to reach the outfeed duct 9 through those ducts. Similarly, in the first operating position P1 the further passage holes 20 are positioned at the secondary duct 4c and the further secondary duct 4d, so that those ducts are also not interrupted.

In the second operating position P2, the obstructing elements 8a, 8b are in contact with each other, that is to say, their contact surfaces 11 are abutting against each other. In this way, the obstructing elements 8a, 8b close the further duct 6 in a cross-section of the latter, thereby preventing the central flow 40 comprising the intermediate material 7 from reaching the outfeed duct 9. The passage holes 10, although being in a position laterally shifted relative to the position they were in when the obstructing elements 8a, 8b were in the first operating position P1, still allow the first duct 4a and the second duct 4b to remain open. In this way, the outer material intended to form the layers 5 can continue to flow into the outfeed duct 9 through the first duct 4a and the second duct 4b. In contrast, the secondary duct 4c and the further secondary duct 4d are blocked by the obstructing elements 8a, 8b, which prevent the outer material intended to form the layers 5, which is present in the secondary ducts 4c, 4d upstream of the obstructing elements 8a, 8b, from flowing into the outfeed duct 9.

In the first operating position P1, both the intermediate material 7 and the outer material intended to form the layers 5 flow into the outfeed duct 9, so as to originate the portions 15 of the multi-layer extrudate 2. Moreover, the material intended to form the outer layers 5 which arrives in the outfeed duct 9 both arrives from the first duct 4a and the second duct 4b, and arrives from the secondary duct 4c and the further secondary duct 4d.

In the second operating position P2, only the outer material intended to form the layers 5, arriving from the first duct 4a and the second duct 4b, flows into the outfeed duct 9. Actually, the obstructing elements 8a, 8b block the flow of material both through the further duct 6, and through the secondary duct 4c and the further secondary duct 4d. Consequently, the further portions 16 of the multi-layer extrudate 2, in which the intermediate material 7 is absent are formed.

The coextrusion apparatus 21 allows the obtainment of a multi-layer extrudate 2 similar to that obtainable with the coextrusion apparatus 1. However, the arrangement of ducts 4, comprising the four ducts 4a, 4b, 4c, 4d and the further duct 6, allows improved control of the flow of outer material intended to form the layers 5.

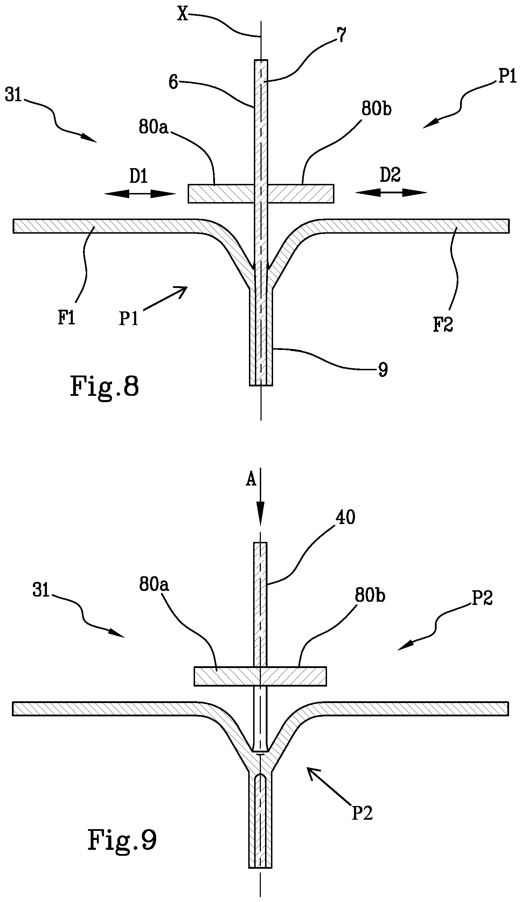

Figures 8 and 9 show a coextrusion apparatus 31 according to an alternative embodiment, which differs from the embodiments previously described mainly due to the position of the obstructing elements. In particular, the coextrusion apparatus 31 comprises two obstructing elements 80a, 80b which are positioned in a position upstream of the position of the obstructing elements 8a, 8b in the embodiments previously described. In more detail, the obstructing elements 80a, 80b are configured to interact only with the central flow 40 comprising the intermediate material 7, but without acting on the outer material intended to form the layers 5.

The obstructing elements 80a, 80b are positioned along the further duct 6 and are movable with a linear movement transversally, in particular perpendicularly, to the axis X along which at least one portion of the further duct 6 extends, that is to say, transversally, in particular perpendicularly, to the advancement direction A of the central flow 40 comprising the intermediate material 7.

The obstructing elements 80a, 80b are movable along respective directions D1, D2, which are aligned with each other, between the first operating position P1, shown in Figure 8, and the second operating position P2, shown in Figure 9. In the first operating position P1, the obstructing elements 80a, 80b are distanced from each other, so that between their contact surfaces 11 a passage is defined for the central flow 40 comprising the intermediate material 7. In other words, in the first operating position P1 the further duct 6 is not interrupted and the intermediate material 7 can reach the outfeed duct 9.

Since the first duct 4a and the second duct 4b are positioned downstream of the obstructing elements 80a, 80b, the obstructing elements 80a, 80b do not interact with those ducts. Consequently, the first duct 4a and the second duct 4b are always open, that is to say, they are always in communication with the outfeed duct 9.

In order to reach the second operating position P2, shown in Figure 9, the obstructing elements 80a, 80b move by sliding transversally, in particular perpendicularly, to the advancement direction A of the central flow 40 comprising the intermediate material 7 in the further duct 6. In this way, the obstructing elements 80a, 80b move towards each other, so as to bring the contact surfaces 11 into contact. At this point, the further duct 6 is closed in a cross-section thereof and the central flow 40 is interrupted, that is to say, the intermediate material 7 no longer reaches the outfeed duct 9. The outer material intended to form the layers 5 continues to arrive in the outfeed duct 9, without being affected in any way by the obstructing elements 80a, 80b. In this way, the further portions 16 of the multi-layer extrudate 2 are formed.

The embodiment described with reference to Figures 8 and 9 allows the forming of a multi-layer extrudate 2 of the type shown in Figure 3 in a very simple way. Actually, the obstructing elements 80a, 80b are very simple in terms of construction, since they are free of holes for the passage of the outer material intended to form the layers 5.

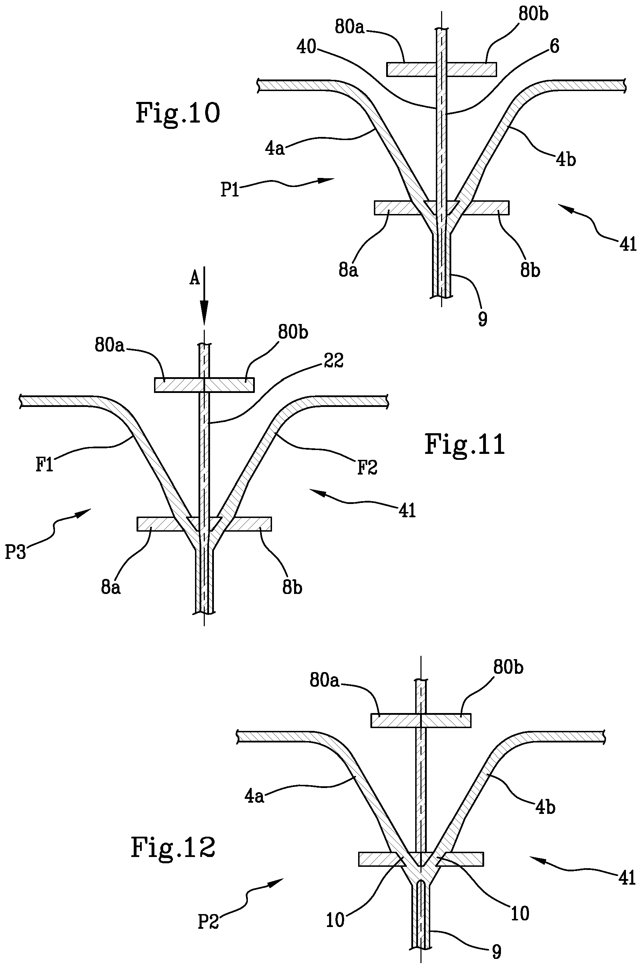

Figures 10 to 12 show a coextrusion apparatus 41 according to an alternative embodiment. In this embodiment, there are four obstructing elements present, that is to say, two obstructing elements 8a, 8b, structurally and functionally similar to the corresponding obstructing elements shown in Figures 1 and 2, and two further obstructing elements 80a, 80b, structurally and functionally similar to the corresponding obstructing elements shown in Figures 8 and 9.

The obstructing elements 8a, 8b are positioned in a zone in which both the intermediate material 7 and the outer material intended to form the layers 5 flow. The further obstructing elements 80a, 80b are positioned upstream of the obstructing elements 8a, 8b relative to the advancement direction A and only interact with the central flow 40 comprising the intermediate material 7. In other words, the obstructing elements 8a, 8b are positioned in a zone near the point at which the further duct 6, the first duct 4a and the second duct 4b merge in the outfeed duct 9. In contrast, the further obstructing elements 80a, 80b are provided in a zone in which the first duct 4a and the second duct 4b are still far from the further duct 6.

A stretch 22 of the further duct 6 is provided between the further obstructing elements 80a, 80b and the obstructing elements 8a, 8b.

The obstructing elements 8a, 8b and the further obstructing elements 80a, 80b are linearly slidable forward and backward along respective directions which are arranged transversally, in particular perpendicularly, to the advancement direction A of the central flow 40 comprising the intermediate material 7, as already described with reference to Figures 1, 2, 8 and 9.

In more detail, the obstructing elements 8a, 8b and the further obstructing elements 80a, 80b may be positioned in a first operating position P1, shown in Figure 10, in a second operating position P2, shown in Figure 12, and in a further operating position P3, shown in Figure 11.

In the first operating position P1, the obstructing elements 8a, 8b are distanced from each other, so as to leave the further duct 6 undisturbed and simultaneously allow the outer material intended to form the layers 5, arriving from the first duct 4a and from the second duct 4b, to flow into the outfeed duct 9. Also the further obstructing elements 80a, 80b are distanced from each other, so that the further duct 6 is not blocked also upstream of the obstructing elements 8a, 8b. In this way, both the central flow 40 comprising the intermediate material 7, and the outer material intended to form the layers 5 reach the outfeed duct 9 to originate the portions 15 of the multi-layer extrudate 2.

In the further operating position P3, the obstructing elements 8a, 8b are still distanced from each other, so as to allow the passage of both the outer material intended to form the layers 5 and the central flow 40 comprising the intermediate material 7. In contrast, the further obstructing elements 80a, 80b are in contact with each other, so as to interrupt the central flow 40 in the further duct 6, upstream of the obstructing elements 8a, 8b. In this position, the outer material intended to form the layers 5 and the intermediate material 7 present in the stretch 22 of the further duct 6 flow into the outfeed duct 9. The portions 15 of the multi-layer extrudate 2 are completed in this way.

Finally, in the second operating position P2, the obstructing elements 8a, 8b are in contact with each other, as are the further obstructing elements 80a, 80b. Therefore, the further duct 6 is closed in its cross-sections positioned at the obstructing elements 8a, 8b and the further obstructing elements 80a, 80b, so that the central flow 40 comprising the intermediate material 7 cannot reach the outfeed duct 9. In contrast, the outer material of the layers 5 can flow into the outfeed duct 9 through the passage holes 10 of the obstructing elements 8a, 8b. Even though, due to the movement of the obstructing elements 8a, 8b, the passage holes 10 are shifted (along a direction transversal to the advancement direction A) relative to the first operating position P1 and to the further operating position P3, the passage holes 10 and the ducts 4a, 4b are dimensioned in such a way that, even in the second operating position P2, the first duct 4a and the second duct 4b are open to allow the outer material to reach the outfeed duct 9. In this condition, only the outer material intended to form the layers 5 flows into the outfeed duct 9. In this way, the further portions 16 of the multi-layer extrudate 2 are originated.

The coextrusion apparatus 41 allows the obtainment of a multi-layer extrudate 2 of the type shown in Figure 3, with optimised control of the pressure of the flows of material which are directed towards the outfeed duct 9, in particular the pressure of the intermediate material 7 on which both the obstructing elements 8a, 8b and the further obstructing elements 80a, 80b act.

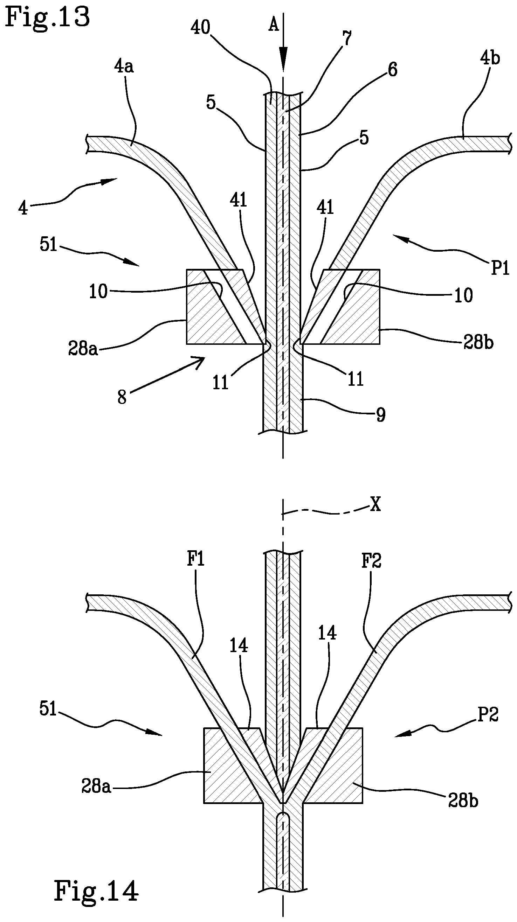

Figures 13 and 14 show a coextrusion apparatus 51 according to an alternative embodiment, which has several structural similarities to the coextrusion apparatus 1 shown in Figures 1 and 2.

Also the coextrusion apparatus 51 comprises an arrangement of ducts 4 which includes the first duct 4a and the second duct 4b for supplying the outer material. The arrangement of ducts 4 also comprises the further duct 6 through which the central flow 40 can pass.

The first duct 4a, the second duct 4b and the further duct 6 merge in the outfeed duct 9.

In the further duct 6, the central flow 40 flows in an advancement direction A. At least an end portion of the further duct 6 near to the outfeed duct 9 extends along the axis X. At least an initial portion of the outfeed duct 9 also extends along the axis X.

Two obstructing elements 28a, 28b are also provided, which in the example shown are positioned immediately upstream of the joining zone 8 in which the first duct 4a, the second duct 4b and the further duct 6 join together to form the outfeed duct 9. The obstructing elements 28a, 28b are linearly movable with a forward and backward movement between a first operating position P1, shown in Figure 13, and a second operating position P2, shown in Figure 14, similarly to what has already been described with reference to the preceding Figures.

As was the case in the preceding embodiments, the obstructing elements are shaped like plates.

The obstructing elements 28a, 28b have respective passage holes 10. As in the examples of the preceding Figures, the passage holes 10 extend in the obstructing elements 28a, 28b with an inclination relative to the axis X which is substantially equal to the inclination of the first duct 4a and respectively of the second duct 4b relative to that axis.

The obstructing elements 28a, 28b shown in Figures 13 and 14 have a thickness, measured along the axis X, greater than the thickness of the obstructing elements shown in the preceding Figures. The obstructing elements 28a, 28 have respective ends facing each other which are partly delimited by the contact surfaces 11. The ends facing each other of the obstructing elements 28a, 28b are also delimited by corresponding bevels 41. Each bevel 41 is positioned in a position adjacent to the corresponding contact surface 11 and is facing towards the further duct 6.

The further duct 6 is configured to receive a central flow 40 which comprises the intermediate material 7 interposed between two layers 5 of outer material. Therefore, the central flow 40 is a multi-layer flow, unlike in the preceding embodiments.

In the first operating position P1, shown in Figure 13, the obstructing elements 28a, 28b are distanced from each other. The contact surfaces 11 are not in contact with each other. Therefore, defined between the contact surfaces 11 there is a space through which the central flow 40 can flow, thereby allowing it to reach the outfeed duct 9.

As in the preceding examples, the distance between the contact surfaces 11 in the first operating position P1 is substantially equal to the thickness of the central flow 40 upstream of the obstructing elements.

In contrast with what happened in the preceding embodiments, in the first operating position P1 the closing surfaces 14 of the obstructing elements 28a, 28b are facing the first duct 4a and respectively the second duct 4b. In this way, the closing surfaces 14 prevent the material present in the first duct 4a and in the second duct 4b from reaching the outfeed duct 9. Therefore, the first duct 4a and the second duct 4b are not in fluid communication with the outfeed duct 9.

In the first operating position P1, the obstructing elements 28a, 28b act therefore as shutter elements which block the first duct 4a and the second duct 4b respectively.

When the obstructing elements 28b, 28b are in the first operating position P1, the portions 15 of the multi-layer extrudate 2 are thus obtained, in which both the intermediate material 7 and the outer material forming the layers 5 are present. Both of these materials arrive from the further duct 6. In the second operating position P2, the obstructing elements 28a, 28b are in contact with each other. In particular, the contact surfaces 11 touch each other along the axis X. In this way, the further duct 6 is isolated from the outfeed duct 9, that is to say, it is no longer in fluid communication with the outfeed duct 9. In other words, the obstructing elements 28a, 28b block the further duct 6.

In the second operating position P2, the passage holes 10 are facing the first duct 4a and the second duct 4b respectively and put the first duct 4a and the second duct 4b in fluid communication with the outfeed duct 9. In this way, the outer material arriving from the first duct 4a and from the second duct 4b can flow into the outfeed duct 9. Here, the outer material forms two layers 5 which are in contact with each other, since the intermediate material 7 is absent, because the further duct 6 is closed by the obstructing elements 28a, 28b. In this way, the further portions 16 of the multi-layer extrudate 2 in which the intermediate material 7 is not present, are formed.

In the embodiments of the coextrusion apparatus described so far, reference has always been made to a dose 3 having the shape of a parallelepiped. This shape is possible because the coextrusion apparatus has a rectangular-shaped outlet mouth, from which the multi-layer extrudate 2 comes out. A special case of a parallelepiped shape is the cubic shape. This means that the dose 3 may have the shape of a parallelepiped in which the length L, the width W and the thickness T are equal to each other, that is to say, of a cube. Other shapes of the dose 3 are also possible, for example a cylindrical shape.

In the embodiments of the coextrusion apparatus described so far, the obstructing elements operate in conjunction with each other to selectively block, at preset intervals, the central flow 40, comprising the intermediate material 7, in the advancement direction A.

It is also possible to provide at least one obstructing element which, rather than stopping the central flow 40, limits that flow, that is to say, even in the second operating position P2 allows a minimum quantity of intermediate material 7 to pass. This allows the obtainment of doses 3 in which the intermediate material 7 minimally appears on the cutting faces 17, which for some applications may be acceptable.

The advancement direction A is defined in a position spanning the at least one obstructing element.

In the examples described above, reference was made to coextrusion apparatuses comprising one or two pairs of obstructing elements. A different number of obstructing elements is also possible in theory. For example, a single obstructing element, operating in conjunction with a contact element, for example but not necessarily located in a fixed position, may be sufficient.

## Claims

1. An apparatus for producing a multi-layer extrudate (2) comprising an intermediate material (7) interposed between at least two layers (5) of outer material, the apparatus comprising an arrangement of ducts (4) which includes a first duct (4a) and a second duct (4b) through which respective lateral flows (F1, F2) of outer material can flow, the arrangement of ducts (4) also including a further duct (6) through which a central flow (40) comprising at least the intermediate material (7) can flow, the apparatus further comprising at least one obstructing element (8a, 8b; 28a, 28b; 80a, 80b) for interacting at least with the central flow (40) while the central flow (40) is advancing in an advancement direction (A), wherein said at least one obstructing element (8a, 8b; 28a, 28b; 80a, 80b) is movable with a movement having a component directed transversally to the advancement direction (A), so as to obstruct the central flow (40) in the advancement direction (A) at preset intervals, wherein said movement is a linear forward and backward movement by means of which said at least one obstructing element (8a, 8b; 28a, 28b; 80a, 80b) is displaceable between a first operating position (P1) and a second operating position (P2), **characterized in that** the apparatus further comprises another obstructing element (8a, 8b; 28a, 28b; 80a, 80b) operating in conjunction with said at least one obstructing element (8a, 8b; 28a, 28b; 80a, 80b) to obstruct the central flow (40) in the second operating position (P2).

2. An apparatus according to claim 1, wherein said at least one obstructing element (8a, 8b; 28a, 28b; 80a, 80b) is configured to interrupt the central flow (40) in the advancement direction (A) at preset intervals, so that the multi-layer extrudate (2) has a plurality of portions (15) in which the intermediate material (7) is present, alternating with further portions (16) in which the intermediate material (7) is absent.

3. An apparatus according to claim 1 or 2, wherein said at least one obstructing element (8a, 8b; 28a, 28b; 80a, 80b) is configured to abut against the other obstructing element (8a, 8b; 28a, 28b; 80a, 80b) in the second operating position (P2), so as to block said further duct (6) and interrupt the central flow (40).

4. An apparatus according to claim 3, wherein the other obstructing element (8a, 8b; 28a, 28b; 80a, 80b) is movable with a linear forward and backward movement transversally to the advancement direction (A), the at least one obstructing element (8a, 8b; 28a, 28b; 80a, 80b) and the other obstructing element (8a, 8b; 28a, 28b; 80a, 80b) being configured to move away from each other in order to reach the first operating position (P1) or alternatively to move towards each other in order to reach the second operating position (P2), and wherein optionally the other obstructing element (8a, 8b; 28a, 28b; 80a, 80b) is positioned symmetrically to said at least one obstructing element (8a, 8b; 28a, 28b; 80a, 80b) relative to a final portion of the further duct (6), the other obstructing element being movable specularly to said at least one obstructing element.

5. An apparatus according to any preceding claim, and further comprising an outfeed duct (9) for the multi-layer extrudate (2), wherein said at least one obstructing element (8a, 8b; 28a, 28b) has a passage hole (10) for putting the first duct (4a) and/or the second duct (4b) in communication with the outfeed duct (6) at least in an operating position selected between the first operating position (P1) and the second operating position (P2).

6. An apparatus according to claim 5, wherein the passage hole (10) has a cross-section such that it allows a respective lateral flow (F1, F2) of the outer material to reach the outfeed duct (9) both in the first operating position (P1) and in the second operating position (P2).

7. An apparatus according to claim 5 or 6, wherein a secondary duct (4c) branches off from the first duct (4a) and a further secondary duct (4d) branches off from the second duct (4b), said at least one obstructing element (8a, 8b) having a further passage hole (20) configured to put the secondary duct (4c) and/or the further secondary duct (4d) in communication with the outfeed duct (9) in the first operating position (P1) and to block the secondary duct (4c) and/or the further secondary duct (4d) in the second operating position (P2).

8. An apparatus according to claim 5, wherein the passage hole (10) is configured to put the first duct (4a) and/or the second duct (4b) in communication with the outfeed duct (6) in the second operating position (P2), said at least one obstructing element (28a, 28b) being configured to interrupt a respective lateral flow (F1, F2) of the outer material in the first operating position (P1), and wherein optionally said further duct (6) is configured to receive a multi-layer central flow (40) comprising the intermediate material (7) interposed between at least two layers of outer material (5).

9. An apparatus according to any one of claims 1 to 4, and further comprising a joining zone (8) in which the first duct (4a) and the second duct (4b) are joined to the further duct (6), said at least one obstructing element (80a, 80b) being positioned upstream of the joining zone (8) in a position distanced from the joining zone (8), so as to obstruct the central flow (40) at preset intervals without interacting with the outer material flowing in the first duct (4a) and/or in the second duct (4b).

10. An apparatus according to any preceding claim, wherein at least a final portion of said further duct (6) extends along an axis (X), the first duct (4a) and the second duct (4b) being positioned on opposite sides of said axis (X), the first duct (4a) and the second duct (4b) having respective terminal portions (13) extending along respective axes (A1, A2), which form with said axis (X) corresponding angles (K1, K2) of less than 90°, preferably less than, or equal to, 45°.

11. An apparatus according to any preceding claim, and further comprising a separating element for separating multi-layer doses (3) from the multi-layer extrudate (2), by cutting the multi-layer extrudate (2) in zones in which the intermediate material (7) is absent or is present in a minimised quantity.

12. A method for producing a multi-layer extrudate (2) comprising an intermediate material (7) interposed between at least two layers (5) of outer material, the method comprising the steps of:
- supplying at least two lateral flows (F1, F2) of outer material;
- supplying a central flow (40) comprising at least the intermediate material (7),
- providing at least one obstructing element (8a, 8b; 28a, 28b; 80a, 80b) which interacts at least with the central flow (40) while the central flow (40) is advancing in an advancement direction (A), wherein said at least one obstructing element (8a, 8b; 28a, 28b; 80a, 80b) moves with a movement having a component directed transversally to the advancement direction (A), so as to obstruct the central flow (40) in the advancement direction (A) at preset intervals, and
wherein said at least one obstructing element (8a, 8b; 28a, 28b; 80a, 80b) moves with a linear movement forward and backward along a direction (D1, D2) arranged transversally to the advancement direction (A) for interrupting or alternatively allowing the central flow (40) in the advancement direction (A), **characterized in that** another obstructing element (8a, 8b; 28a, 28b; 80a, 80b) operates in conjunction with said at least one obstructing element (8a, 8b; 28a, 28b; 80a, 80b) to obstruct the central flow (40) in the second operating position (P2).

13. A method according to claim 12, wherein the central flow (40) is a multi-layer flow comprising the intermediate material interposed between two layers of outer material, said at least one obstructing element (28a, 28b) shifting between a first operating position (P1), in which said at least one obstructing element (28a, 28b) allows the central flow (40) to pass while blocking the lateral flows (F1, F2), and a second operating position (P2), in which said at least one obstructing element (28a, 28b) interrupts the central flow (40) while allowing the lateral flows (F1, F2) to pass.

14. A method according to claim 12, wherein said at least one obstructing element (8a, 8b) shifts between a first operating position (P1), in which said at least one obstructing element (8a, 8b) allows both the central flow (40) and the lateral flows (F1, F2) to pass, and a second operating position (P2), in which said at least one obstructing element (8a, 8b) interrupts the central flow (40) while allowing the lateral flows (F1, F2) to pass.

15. A method according to claim 12, wherein said at least one obstructing element (80a, 80b) leaves the lateral flows (F1, F2) undisturbed, said at least one obstructing element (80a, 80b) shifting between a first operating position (P1), in which said at least one obstructing element (80a, 80b) allows the central flow (40) to pass, and a second operating position (P2), in which said at least one obstructing element (80a, 80b) interrupts the central flow (40).

## Patentansprüche

1. Vorrichtung zur Herstellung eines mehrschichtigen Extrudats (2), umfassend ein Zwischenmaterial (7), das zwischen mindestens zwei Schichten (5) von Außenmaterial angeordnet ist, wobei die Vorrichtung eine Anordnung von Kanälen (4) umfasst, die einen ersten Kanal (4a) und einen zweiten Kanal (4b) umfasst, durch die entsprechende seitliche Ströme (F1, F2) des Außenmaterials fließen können, wobei die Anordnung von Kanälen (4) auch einen weiteren Kanal (6) umfasst, durch den ein mittlerer Strom (40), der mindestens das Zwischenmaterial (7) beinhaltet, fließen kann, wobei die Vorrichtung ferner mindestens ein Absperrelement (8a, 8b; 28a, 28b; 80a, 80b) umfasst, um zumindest mit dem mittleren Strom (40) in Wechselwirkung zu treten, während sich der mittlere Strom (40) in einer Vorschubrichtung (A) vorwärtsbewegt, wobei das mindestens eine Absperrelement (8a, 8b; 28a, 28b; 80a, 80b) mit einer Bewegung bewegbar ist, die eine quer zur Vorschubrichtung (A) gerichtete Komponente aufweist, um den mittleren Strom (40) in der Vorschubrichtung (A) in vorgegebenen Intervallen zu hemmen, wobei die Bewegung eine lineare Vorwärts- und Rückwärtsbewegung ist, durch die das mindestens eine Absperrelement (8a, 8b; 28a, 28b; 80a, 80b) zwischen einer ersten Arbeitsstellung (P1) und einer zweiten Arbeitsstellung (P2) verschiebbar ist, **dadurch gekennzeichnet, dass** die Vorrichtung ferner ein anderes Absperrelement (8a, 8b; 28a, 28b; 80a, 80b) umfasst, das in Verbindung mit dem mindestens einen Absperrelement (8a, 8b; 28a, 28b; 80a, 80b) wirkt, um in der zweiten Arbeitsstellung (P2) den mittleren Strom (40) zu hemmen.

2. Vorrichtung nach Anspruch 1, wobei das mindestens eine Absperrelement (8a, 8b; 28a, 28b; 80a, 80b) dafür ausgelegt ist, den mittleren Strom (40) in der Vorschubrichtung (A) in vorgegebenen Intervallen zu unterbrechen, so dass das mehrschichtige Extrudat (2) eine Vielzahl von Abschnitten (15) aufweist, in denen das Zwischenmaterial (7) vorhanden ist, abwechselnd mit weiteren Abschnitten (16), in denen das Zwischenmaterial (7) nicht vorhanden ist.

3. Vorrichtung nach Anspruch 1 oder 2, wobei das mindestens eine Absperrelement (8a, 8b; 28a, 28b; 80a, 80b) dafür ausgelegt ist, in der zweiten Arbeitsstellung (P2) gegen das andere Absperrelement (8a, 8b; 28a, 28b; 80a, 80b) anzuschlagen, um so den weiteren Kanal (6) zu blockieren und den mittleren Strom (40) zu unterbrechen.

4. Vorrichtung nach Anspruch 3, wobei das andere Absperrelement (8a, 8b; 28a, 28b; 80a, 80b) mit einer linearen Vorwärts- und Rückwärtsbewegung quer zur Vorschubrichtung (A) bewegbar ist, wobei das mindestens eine Absperrelement (8a, 8b; 28a, 28b; 80a, 80b) und das andere Absperrelement (8a, 8b; 28a, 28b; 80a, 80b) dafür ausgelegt sind, sich voneinander weg zu bewegen, um die erste Arbeitsstellung (P1) einzunehmen, oder sich alternativ dazu aufeinander zu zu bewegen. um die zweite Arbeitsstellung (P2) einzunehmen, und wobei optional das andere Absperrelement (8a, 8b; 28a, 28b; 80a, 80b) symmetrisch zu dem mindestens einen Absperrelement (8a, 8b; 28a, 28b; 80a, 80b) relativ zu einem Endabschnitt des weiteren Kanals (6) angeordnet ist, wobei das andere Absperrelement spiegelbildlich zu dem mindestens einen Absperrelement bewegbar ist.

5. Vorrichtung nach einem der vorhergehenden Ansprüche, und ferner umfassend einen Ausgabekanal (9) für das mehrschichtige Extrudat (2), wobei das mindestens eine Absperrelement (8a, 8b; 28a, 28b) ein Durchgangsloch (10) aufweist, um den ersten Kanal (4a) und/oder den zweiten Kanal (4b), zumindest in einer Arbeitsstellung, ausgewählt aus der ersten Arbeitsstellung (P1) und der zweiten Arbeitsstellung (P2), mit dem Ausgabekanal (6) in Verbindung zu setzen.

6. Vorrichtung nach Anspruch 5, wobei das Durchgangsloch (10) einen Querschnitt aufweist, der so beschaffen ist, dass er einem entsprechenden seitlichen Strom (F1, F2) des Außenmaterials erlaubt, den Ausgabekanal (9) sowohl in der ersten Arbeitsstellung (P1) als auch in der zweiten Arbeitsstellung (P2) zu erreichen.

7. Vorrichtung nach Anspruch 5 oder 6, wobei ein sekundärer Kanal (4c) vom ersten Kanal (4a) abzweigt und ein weiterer sekundärer Kanal (4d) vom zweiten Kanal (4b) abzweigt, wobei das mindestens eine Absperrelement (8a, 8b) ein weiteres Durchgangsloch (20) aufweist, das dafür ausgelegt ist, den sekundären Kanal (4c) und/oder den weiteren sekundären Kanal (4d) in der ersten Arbeitsstellung (P1) in Verbindung mit dem Ausgabekanal (9) zu setzen und den sekundären Kanal (4c) und/oder den weiteren sekundären Kanal (4d) in der zweiten Arbeitsstellung (P2) zu blockieren.

8. Vorrichtung nach Anspruch 5, wobei das Durchgangsloch (10) dafür ausgelegt ist, den ersten Kanal (4a) und/oder den zweiten Kanal (4b) in der zweiten Arbeitsstellung (P2) in Verbindung mit dem Ausgabekanal (6) zu setzen, wobei das mindestens eine Absperrelement (28a, 28b) dafür ausgelegt ist, in der ersten Arbeitsstellung (P1) einen entsprechenden seitlichen Strom (F1, F2) des Außenmaterials zu unterbrechen, und wobei optional der weitere Kanal (6) dafür ausgelegt ist, einen mehrschichtigen mittleren Strom (40) zu empfangen, der das zwischen mindestens zwei Schichten (5) von Außenmaterial angeordnete Zwischenmaterial (7) enthält.

9. Vorrichtung nach einem der Ansprüche von 1 bis 4, und ferner umfassend einen Verbindungsbereich (8), in dem der erste Kanal (4a) und der zweite Kanal (4b) mit dem weiteren Kanal (6) verbunden sind, wobei das mindestens eine Absperrelement (80a, 80b) stromaufwärts des Verbindungsbereichs (8) in einer Position angeordnet ist, die von dem Verbindungsbereich (8) beabstandet ist, um den mittleren Strom (40) in vorgegebenen Intervallen zu hemmen, ohne mit dem Außenmaterial in Wechselwirkung zu treten, das in dem ersten Kanal (4a) und/oder in dem zweiten Kanal (4b) fließt.

10. Vorrichtung nach einem der vorhergehenden Ansprüche, wobei mindestens ein Endabschnitt des weiteren Kanals (6) sich entlang einer Achse (X) erstreckt, wobei der erste Kanal (4a) und der zweite Kanal (4b) auf einander gegenüberliegenden Seiten der genannten Achse (X) angeordnet sind, wobei der erste Kanal (4a) und der zweite Kanal (4b) jeweilige Endabschnitte (13) aufweisen, die sich entlang jeweiliger Achsen (A1, A2) erstrecken, die mit der Achse (X) entsprechende Winkel (K1, K2) von weniger als 90°, vorzugsweise weniger als oder gleich 45°, bilden.

11. Vorrichtung nach einem der vorhergehenden Ansprüche, und ferner umfassend ein Trennelement zum Abtrennen von mehrschichtigen Dosen (3) von dem mehrschichtigen Extrudat (2) durch Schneiden des mehrschichtigen Extrudats (2) in Bereichen, in denen das Zwischenmaterial (7) nicht oder in minimierter Menge vorhanden ist.

12. Verfahren zur Herstellung eines mehrschichtigen Extrudats (2), umfassend ein Zwischenmaterial (7), das zwischen mindestens zwei Schichten (5) aus Außenmaterial angeordnet ist, wobei das Verfahren die folgenden Schritte beinhaltet:
- Zuführen von mindestens zwei seitlichen Strömen (F1, F2) des Außenmaterials;
- Zuführen eines mittleren Stroms (40), der zumindest das Zwischenmaterial (7) enthält,
- Bereitstellen von mindestens einem Absperrelement (8a, 8b; 28a, 28b; 80a, 80b), das zumindest mit dem mittleren Strom (40) in Wechselwirkung tritt, während sich der mittlere Strom (40) in einer Vorschubrichtung (A) vorwärtsbewegt, wobei das mindestens eine Absperrelement (8a, 8b; 28a, 28b; 80a, 80b) sich mit einer Bewegung bewegt, die eine quer zur Vorschubrichtung (A) gerichtete Komponente aufweist, um den mittleren Strom (40) in der Vorschubrichtung (A) in vorgegebenen Intervallen zu hemmen, und
wobei sich das mindestens eine Absperrelement (8a, 8b; 28a, 28b; 80a, 80b) mit einer linearen Bewegung vor- und rückwärts entlang einer Richtung (D1, D2) bewegt, die quergerichtet zu der Vorschubbewegung (A) verläuft, um das Fließen des mittleren Stroms (40) in der Vorschubrichtung (A) zu unterbrechen oder alternativ dazu zuzulassen, **dadurch gekennzeichnet, dass** ein anderes Absperrelement (8a, 8b; 28a, 28b; 80a, 80b) in Verbindung mit dem mindestens einen Absperrelement (8a, 8b; 28a, 28b; 80a, 80b) zusammenwirkt, um in der zweiten Arbeitsstellung (P2) den mittleren Strom (40) zu hemmen.

13. Verfahren nach Anspruch 12, wobei der mittlere Strom (40) ein mehrschichtiger Strom ist, der das zwischen zwei Schichten des Außenmaterials angeordnete Zwischenmaterial umfasst, wobei das mindestens eine Absperrelement (28a, 28b) zwischen einer ersten Arbeitsstellung (P1), in der das mindestens eine Absperrelement (28a, 28b) den mittleren Strom (40) durchfließen lässt, während es die seitlichen Ströme (F1, F2) blockiert, und einer zweiten Arbeitsstellung (P2), in der das mindestens eine Absperrelement (28a, 28b) den mittleren Strom (40) unterbricht, während es die seitlichen Ströme (F1, F2) durchfließen lässt, wechselt.

14. Verfahren nach Anspruch 12, wobei das mindestens eine Absperrelement (8a, 8b) zwischen einer ersten Arbeitsstellung (P1), in der das mindestens eine Absperrelement (8a, 8b) sowohl den mittleren Strom (40) als auch die seitlichen Ströme (F1, F2) durchfließen lässt, und einer zweiten Arbeitsstellung (P2), in der das mindestens eine Absperrelement (8a, 8b) den mittleren Strom (40) unterbricht, während es die seitlichen Ströme (F1, F2) durchfließen lässt, wechselt.

15. Verfahren nach Anspruch 12, wobei das mindestens eine Absperrelement (80a, 80b) die seitlichen Ströme (F1, F2) ungestört lässt, wobei das mindestens eine Absperrelement (80a, 80b) zwischen einer ersten Arbeitsstellung (P1), in der das mindestens eine Absperrelement (80a, 80b) den mittleren Strom (40) durchfließen lässt, und einer zweiten Arbeitsstellung (P2), in der das mindestens eine Absperrelement (80a, 80b) den mittleren Strom (40) unterbricht, wechselt.

## Revendications

1. Appareil de production d'un extrudat multi-couche (2) comprenant un matériau intermédiaire (7) interposé entre au moins deux couches (5) de matériau extérieur, l'appareil comprenant une disposition de conduits (4) qui comprend un premier conduit (4a) et un deuxième conduit (4b) à travers lesquels des flux latéraux (F1, F2) de matériau extérieur peuvent s'écouler, la disposition de conduits (4) comprenant également un autre conduit (6) à travers lequel un flux central (40) comprenant au moins le matériau intermédiaire (7) peut s'écouler, l'appareil comprenant en outre au moins un élément d'obstruction (8a, 8b ; 28a, 28b ; 80a, 80b) pour interagir au moins avec le flux central (40) lors de l'avance du flux central (40) dans une direction d'avance (A), dans lequel ledit au moins un élément d'obstruction (8a, 8b ; 28a, 28b ; 80a, 80b) est mobile avec un mouvement ayant une composante dirigée transversalement à la direction d'avance (A), de manière à obstruer le flux central (40) dans la direction d'avance (A) à des intervalles prédéfinis, dans lequel ledit mouvement est un mouvement linéaire en avant et en arrière par le biais duquel ledit au moins un élément d'obstruction (8a, 8b ; 28a, 28b ; 80a, 80b) peut être déplacé entre une première position opérationnelle (P1) et une deuxième position opérationnelle (P2), **caractérisé en ce que** l'appareil comprend en outre un autre élément d'obstruction (8a, 8b ; 28a, 28b ; 80a, 80b) fonctionnant conjointement avec ledit au moins un élément d'obstruction (8a, 8b ; 28a, 28b ; 80a, 80b) pour obstruer le flux central (40) dans la deuxième position opérationnelle (P2).

2. Appareil selon la revendication 1, dans lequel ledit au moins un élément d'obstruction (8a, 8b ; 28a, 28b ; 80a, 80b) est configuré pour interrompre le flux central (40) dans la direction d'avance (A) à des intervalles prédéfinis, de manière à ce que l'extrudat multi-couche (2) ait une pluralité de portions (15) dans lesquelles le matériau intermédiaire (7) est présent, alternées avec d'autres portions (16) dans lesquelles le matériau intermédiaire (7) est absent.

3. Appareil selon la revendication 1 ou 2, dans lequel ledit au moins un élément d'obstruction (8a, 8b ; 28a, 28b ; 80a, 80b) est configuré pour buter contre l'autre élément d'obstruction (8a, 8b ; 28a, 28b ; 80a, 80b) dans la deuxième position opérationnelle (P2), de manière à bloquer ledit autre conduit (6) et à interrompre le flux central (40).

4. Appareil selon la revendication 3, dans lequel l'autre élément d'obstruction (8a, 8b ; 28a, 28b ; 80a, 80b) est mobile avec un mouvement linéaire en avant et en arrière transversalement à la direction d'avance (A), ledit au moins un élément d'obstruction (8a, 8b ; 28a, 28b ; 80a, 80b) et l'autre élément d'obstruction (8a, 8b ; 28a, 28b ; 80a, 80b) étant configurés pour s'éloigner l'un de l'autre afin d'atteindre la première position opérationnelle (P1) ou alternativement pour se rapprocher l'un de l'autre afin d'atteindre la deuxième position opérationnelle (P2), et dans lequel optionnellement l'autre élément d'obstruction (8a, 8b ; 28a, 28b ; 80a, 80b) est positionné symétriquement audit au moins un élément d'obstruction (8a, 8b ; 28a, 28b ; 80a, 80b) par rapport à une portion finale de l'autre conduit (6), l'autre élément d'obstruction étant mobile de façon spéculaire audit au moins un élément d'obstruction.

5. Appareil selon l'une quelconque des revendications précédentes, et comprenant en outre un conduit de sortie (9) pour l'extrudat multi-couche (2), dans lequel ledit au moins un élément d'obstruction (8a, 8b ; 28a, 28b) a un trou de passage (10) pour mettre le premier conduit (4a) et/ou le deuxième conduit (4b) en communication avec le conduit de sortie (6) au moins dans une position opérationnelle sélectionnée entre la première position opérationnelle (P1) et la deuxième position opérationnelle (P2).

6. Appareil selon la revendication 5, dans lequel le trou de passage (10) a une section transversale telle qu'elle permet à un flux latéral (F1, F2) respectif du matériau extérieur d'atteindre le conduit de sortie (9) à la fois dans la première position opérationnelle (P1) et dans la deuxième position opérationnelle (P2).

7. Appareil selon la revendication 5 ou 6, dans lequel un conduit secondaire (4c) se ramifie à partir du premier conduit (4a) et un autre conduit secondaire (4d) se ramifie à partir du deuxième conduit (4b), ledit au moins un élément d'obstruction (8a, 8b) ayant un autre trou de passage (20) configuré pour mettre le conduit secondaire (4c) et/ou l'autre conduit secondaire (4d) en communication avec le conduit de sortie (9) dans la première position opérationnelle (P1) et pour bloquer le conduit secondaire (4c) et/ou l'autre conduit secondaire (4d) dans la deuxième position opérationnelle (P2).

8. Appareil selon la revendication 5, dans lequel le trou de passage (10) est configuré pour mettre le premier conduit (4a) et/ou le deuxième conduit (4b) en communication avec le conduit de sortie (6) dans la deuxième position opérationnelle (P2), ledit au moins un élément d'obstruction (28a, 28b) étant configuré pour interrompre un flux latéral (F1, F2) respectif du matériau extérieur dans la première position opérationnelle (P1), et dans lequel optionnellement ledit autre conduit (6) est configuré pour recevoir un flux central (40) multi-couche comprenant le matériau intermédiaire (7) interposé entre au moins deux couches de matériau extérieur (5).

9. Appareil selon l'une quelconque des revendications de 1 à 4, et comprenant en outre une zone de jonction (8) dans laquelle le premier conduit (4a) et le deuxième conduit (4b) sont joints à l'autre conduit (6), ledit au moins un élément d'obstruction (80a, 80b) étant positionné en amont de la zone de jonction (8) dans une position espacée de la zone de jonction (8), de manière à obstruer le flux central (40) à intervalles prédéfinis sans interagir avec le matériau extérieur s'écoulant dans le premier conduit (4a) et/ou dans le deuxième conduit (4b).

10. Appareil selon l'une quelconque des revendications précédentes, dans lequel au moins une portion finale dudit autre conduit (6) s'étend le long d'un axe (X), le premier conduit (4a) et le deuxième conduit (4b) étant positionnés sur des côtés opposés dudit axe (X), le premier conduit (4a) et le deuxième conduit (4b) ayant des portions terminales (13) respectives s'étendant le long d'axes (A1, A2) respectifs, qui forment avec ledit axe (X) des angles (K1, K2) correspondants inférieurs à 90°, de préférence inférieurs à, ou égaux à, 45°.

11. Appareil selon l'une quelconque des revendications précédentes, et comprenant en outre un élément de séparation pour séparer des doses multi-couche (3) de l'extrudat multi-couche (2), en coupant l'extrudat multi-couche (2) dans des zones où le matériau extérieur (7) est absent ou est présent en quantité minime.

12. Méthode de production d'un extrudat multi-couche (2) comprenant un matériau intermédiaire (7) interposé entre au moins deux couches (5) de matériau extérieur, la méthode comprenant les étapes consistant à :
- alimenter au moins deux flux latéraux (F1, F2) de matériau extérieur ;
- alimenter un flux central (40) comprenant au moins le matériau extérieur (7),
- prévoir au moins un élément d'obstruction (8a, 8b ; 28a, 28b ; 80a, 80b) qui interagit au moins avec le flux central (40) lors de l'avance du flux central (40) dans une direction d'avance (A), dans laquelle ledit au moins un élément d'obstruction (8a, 8b ; 28a, 28b ; 80a, 80b) se déplace avec un mouvement ayant une composante dirigée transversalement à la direction d'avance (A), de manière à obstruer le flux central (40) dans la direction d'avance (A) à des intervalles prédéfinis, et
dans laquelle ledit au moins un élément d'obstruction (8a, 8b ; 28a, 28b ; 80a, 80b) se déplace avec un mouvement linéaire en avant et en arrière le long d'une direction (D1, D2) disposée transversalement à la direction d'avance (A) pour interrompre ou alternativement permettre le flux central (40) dans la direction d'avance (A), **caractérisée en ce qu'**un autre élément d'obstruction (8a, 8b ; 28a, 28b ; 80a, 80b) fonctionne conjointement avec ledit au moins un élément d'obstruction (8a, 8b ; 28a, 28b ; 80a, 80b) pour obstruer le flux central (40) dans la deuxième position opérationnelle (P2).

13. Méthode selon la revendication 12, dans laquelle le flux central (40) est un flux multi-couche comprenant le matériau intermédiaire interposé entre deux couches de matériau extérieur, ledit au moins un élément d'obstruction (28a, 28b) se déplaçant entre une première position opérationnelle (P1), dans laquelle ledit au moins un élément d'obstruction (28a, 28b) permet au flux central (40) de passer alors qu'il bloque les flux latéraux (F1, F2), et une deuxième position opérationnelle (P2), dans laquelle ledit au moins un élément d'obstruction (28a, 28b) interrompt le flux central (40) alors qu'il permet aux flux latéraux (F1, F2) de passer.

14. Méthode selon la revendication 12, dans laquelle ledit au moins un élément d'obstruction (8a, 8b) se déplace entre une première position opérationnelle (P1), dans laquelle ledit au moins un élément d'obstruction (8a, 8b) permet à la fois au flux central (40) et aux flux latéraux (F1, F2) de passer, et une deuxième position opérationnelle (P2), dans laquelle ledit au moins un élément d'obstruction (8a, 8b) interrompt le flux central (40) alors qu'il permet aux flux latéraux (F1, F2) de passer.

15. Méthode selon la revendication 12, dans laquelle ledit au moins un élément d'obstruction (80a, 80b) laisse les flux latéraux (F1, F2) tels qu'ils sont, ledit au moins un élément d'obstruction (80a, 80b) se déplaçant entre une première position opérationnelle (P1), dans laquelle ledit au moins un élément d'obstruction (80a, 80b) permet au flux central (40) de passer, et une deuxième position opérationnelle (P2), dans laquelle ledit au moins un élément d'obstruction (80a, 80b) interrompt le flux central (40).
